# EUROPÄISCHE PATENTSCHRIFT

(11) **EP 1 509 991 B1**
(45) Veröffentlichungstag und Bekanntmachung des Hinweises auf die Patenterteilung: **25.01.2006**
(21) Anmeldenummer: 03732499.3
(22) Anmeldetag: 30.05.2003
(51) Int. Cl.: H02M 3/158, H02J 9/04, H02M 3/28

(54) **ELEKTRISCHE SPANNUNGSVERSORGUNGSSCHALTUNG SOWIE VERFAHREN**
ELECTRICAL POWER SUPPLY CIRCUIT AND CORRESPONDING METHOD
CIRCUIT D'ALIMENTATION EN TENSION ELECTRIQUE ET PROCEDE ASSOCIE

(30) Priorität: 04.06.2002 DE 10224691
(43) Veröffentlichungstag der Anmeldung: 02.03.2005
(73) Patentinhaber: Leopold Kostal GmbH & Co. KG, 58507 Lüdenscheid (DE)
(72) Erfinder: LANDWEHR, Frank, 44227 Dortmund (DE)
(86) Internationale Anmeldenummer: PCT/EP2003/005666
(87) Internationale Veröffentlichungsnummer: WO 2003/103118

(56) Entgegenhaltungen:
- DE-A- 19 646 666
- US-B1- 6 370 045

## Beschreibung

Die vorliegende Erfindung betrifft eine elektrische Spannungsversorgungsschaltung zur Bereitstellung einer stabilisierten Ausgangs-Gleichspannung, umfassend einen eingangsseitig über einen ersten steuerbaren Schalter mit einem Wechselspannungsnetz verbindbaren Gleichrichter und einen mit diesem ausgangsseitig verbundenen Hochsetzsteller sowie eine mit Mitteln zur Überwachung der Ausgangsspannung des Gleichrichters versehene elektronische Steuerschaltung, welche über ein Schaltnetzteil aus der Ausgangsspannung des Hochsetzstellers mit einer Betriebsspannung versorgbar ist. Außerdem betrifft die Erfindung ein entsprechendes Verfahren zum Betrieb einer solchen Spannungsversorgungsschaltung.

Derartige Spannungsversorgungsschaltungen werden beispielweise zum Betrieb handgeführter Elektrowerkzeuge an unterschiedlichsten Versorgungsnetzen eingesetzt. Hierbei kann eine minimale Netzspannungsqualität nicht definiert werden. Insbesondere bei einem Betrieb an Notstromaggregaten können Überspannungen auftreten, die die zulässigen Netzspannungsgrenzen überschreiten und zur Zerstörung der Elektrowerkzeuge führen.

Um die mit Spannung zu versorgenden Geräte zu schützen, ist deshalb eine Trennung der Schaltung vom Versorgungsnetz beim Auftreten solcher Überspannungen vorgesehen.

Die dazu im Stand der Technik bekannten Geräte haben jedoch den Nachteil, daß mit der Trennung der Schaltung vom Versorgungsnetz auch gleichzeitig die Steuerschaltung ohne Spannungsversorgung ist, so daß eine ggf. gewünschte Fehleranzeige oder -diagnose nicht möglich ist. Der Benutzer erhält deshalb keine Rückmeldung über den aufgetretenen Fehler.

Die erfindungsgemäße Spannungsversorgungsschaltung hat demgegenüber den Vorteil, daß auch bei einer überspannungsbedingten Abschaltung der zum Betrieb des Gerätes vorgesehenen Haupt-Versorgungsspannung die Steuerschaltung weiterhin mit einer Betriebsspannung versorgt ist.

Dies ist dadurch ermöglicht, daß das zur Erzeugung dieser Betriebsspannung vorgesehehe Schaltnetzteil eingangsseitig zusätzlich mit Mitteln zur Gleichrichtung und Begrenzung einer Spannung verbunden ist, welche über einen zweiten steuerbaren Schalter direkt mit dem Wechselspannungsnetz . verbindbar sind.

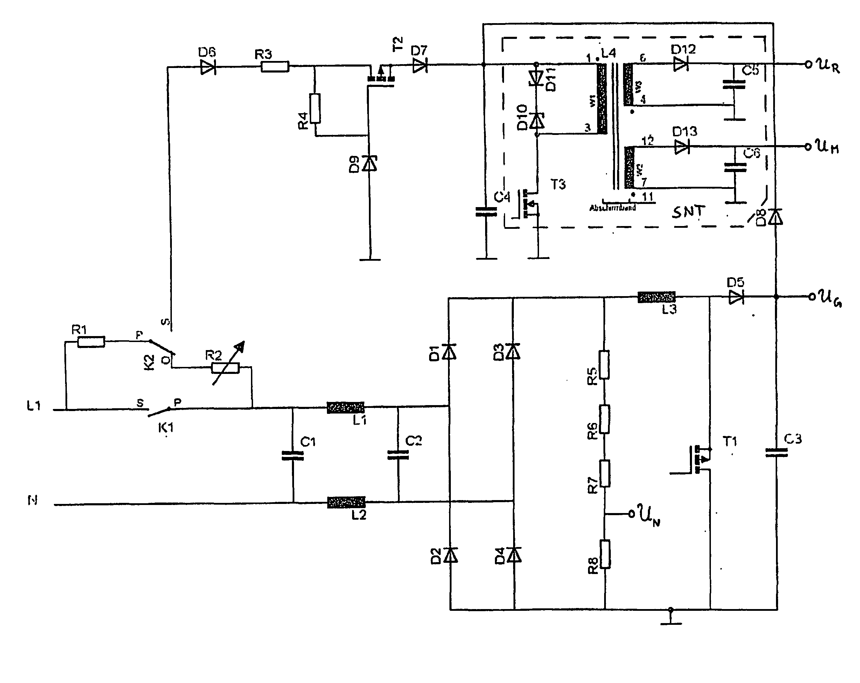

Besonders günstige Ausgestaltungen des erfindungsgemäßen Gegenstands sind in den Unteransprüchen angegeben und werden anhand des in der Zeichnung dargestellten Ausführungsbeispiels näher erläutert.

Wie aus der Zeichnung ersichtlich, umfaßt die Spannungsversorgungsschaltung einen aus den vier Dioden D1 bis D4 gebildeten Brückengleichrichter, dem eingangsseitig ein durch die Kondensatoren C1 und C2 sowie die Spulen L1 und L2 gebildetes Netzspannungsfilter vorgeschaltet ist. Dieses Netzspannungsfilter ist über das Relais K1 bzw. parallel dazu über das Relais K2, welches in Reihe mit zwei Widerständen R1 und R2 geschaltet ist, mit dem Wechselspannungsnetz verbindbar. Die Relais K1 und K2 sind in der Zeichnung in ihrer Ruhelage dargestellt, in der sie sich vor Anlegen der Netzspannung befinden.

Wird die Schaltung an ein Versorgungsnetz angeschlossen, so werden über den durch die Widerstände R1 und R2 gebildeten Ladewiderstand die Kondensatoren C1 und C2 aufgeladen. Zur Begrenzung des Ladestroms ist der Widerstand R2 in diesem Ausführungsbeispiel als PTC ausgeführt. Wird eine minimale Ladespannung überschritten, so wird das Relais K1 angezogen, und der im wesentlichen durch die Spule L3 und den Transistor T1 gebildete Hochsetzsteller stellt die gewünschte Ausgangsspannung U_{G} als Versorgungsspannung für das nachgeschaltete Gerät zur Verfügung.

Zur Detektion einer eventuellen Netz-Überspannung wird die Ausgangsspannung des Gleichrichters von der Steuerschaltung über den durch die Widerstände R5 bis R8 gebildeten Spannungteiler ständig gemessen und überwacht. Dazu wird die Spannung U_{N} einem Analog-Digital-Wandlereingang eines Mikroprozessors der Steuerschaltung zugeführt.

Der Hochsetzsteller wird durch die Steuerschaltung zur Bereitstellung einer Leistungsfaktorkorrekturfunktion angesteuert. Diese Funktion sorgt für eine sinusförmige Stromaufnahme, die phasengleich zur Netzspannung ist, wodurch eine unnötige Belastung des Versorgungsnetzes vermieden wird.

Die Ausgangsspannung U_{G} des Hochsetzstellers, welche in diesem Falle 385 Volt beträgt, wird gleichzeitig auch zur Versorgung der Steuerschaltung mit ihrer notwendigen Betriebsspannung herangezogen. Sie wird dazu einem Schaltnetzteil SNT zugeführt, welches daraus zwei kleinere Spannungen U_{R} = 15 Volt und UM = 7 Volt zur Versorgung der Relais und des Mikroprozessors erzeugt.

Übersteigt die angelegte Netzspannung die zulässige Obergrenze, so können Bauteile geschädigt oder zerstört werden. Um dies unter allen Umständen zu verhindern, muß hinter der Netzklemme der Strompfad aufgetrennt werden. Dies geschieht durch das Öffnen des Relais K1, sobald die gemessene Spannung U_{N} einen vorgegebenen Wert übersteigt. Das gleichzeitige Umschalten des parallel zu dem Relais K1 geschalteten Wechslerrelais K2 bewirkt zum einen, daß auch die Netzverbindung des Gleichrichters über den Ladewiderstand unterbrochen ist, so daß alle zu schützenden Bauteile vom Netz getrennt sind. Zum anderen wird aber zugleich über den Schliesserkontakt des Relais K2 das Schaltnetzteil SNT weiter versorgt, um so die Spannungsversorgung für das Relais bzw. den Mikroprozessor zu gewährleisten. Hierbei wird die Netzeingangsspannung durch eine Diode D6 zunächst auf die positiven Halbwellen begrenzt, welche dann einem mit seinem Gate über eine Zenerdiode D9 mit Massepotential verbundenen Längstransistor zugeführt werden. Dadurch wird die Primärspannung des Schaltnetzteils SNT auf ca. 400 Volt begrenzt, um dieses durch die anliegende Netzüberspannung nicht zu zerstören.

## Patentansprüche

1. Elektrische Spannungsversorgungsschaltung zur Bereitstellung einer stabilisierten Ausgangs-Gleichspannung U_{G}, umfassend einen eingangsseitig über einen ersten steuerbaren Schalter (K1) mit einem Wechselspannungsnetz verbindbaren Gleichrichter und einen mit diesem ausgangsseitig verbundenen Hochsetzsteller sowie eine mit Mitteln zur Überwachung der Ausgangsspannung des Gleichrichters versehene elektronische Steuerschaltung, welche über ein Schaltnetzteil aus der Ausgangsspannung des Hochsetzstellers mit einer Betriebsspannung versorgbar ist, **dadurch gekennzeichnet, daß** das Schaltnetzteil eingangsseitig zusätzlich mit Mitteln (D₆, D₇, D₉; T₂; R₃, R₄) zur Gleichrichtung und Begrenzung einer Spannung verbunden ist, welche über einen zweiten steuerbaren Schalter (K2) direkt mit dem Wechselspannungsnetz verbindbar sind.

2. Elektrische Spannungsversorgungsschaltung nach Anspruch 1, **dadurch gekennzeichnet, daß** die Steuerschaltung einen Mikroprozessor umfaßt.

3. Elektrische Spannungsversorgungsschaltung nach Anspruch 1 oder 2, **dadurch gekennzeichnet, daß** der erste steuerbare Schalter (K1) und der zweite steuerbare Schalter (K2) parallel zueinander angeordnet sind, wobei der erste Schalter (K1) als Einschalter und der zweite Schalter (K2) als Umschalter ausgeführt ist.

4. Elektrische Spannungsversorgungsschaltung nach einem der Ansprüche 1 bis 3, **dadurch gekennzeichnet, daß** der erste (K1) und der zweite steuerbare Schalter (K2) jeweils als Relais ausgeführt sind.

5. Elektrische Spannungsversorgungsschaltung nach einem der Ansprüche 1 bis 4, **dadurch gekennzeichnet, daß** die mit dem Schaltnetzteil (SNT) eingangsseitig verbundenen Mittel zur Gleichrichtung und Begrenzung einer Spannung eine Längsdiode (D6) sowie einen mit seinem Gate über eine Zenerdiode (D9) mit Massepotential verbundenen Längstransistor (T2) umfassen.

6. Elektrische Spannungsversorgungsschaltung nach einem der Ansprüche 1 bis 5, **dadurch gekennzeichnet, daß** das Schaltnetzteil (SNT) zwei verschiedene Ausgangsspannungen zum Betrieb der steuerbaren Schalter (K1, K2) und des Mikroprozessors liefert.

7. Verfahren zum Betrieb einer Spannungsversorgungsschaltung nach einem der vorangehenden Ansprüche, wobei im Normalbetrieb der Gleichrichter über den geschlossenen ersten Schalter (K1) mit dem Wechselspannungsnetz verbunden ist und das Schaltnetzteil (SNT) aus der Ausgangsspannung des Hochsetzstellers versorgt wird, **dadurch gekennzeichnet, daß** beim Erkennen einer Überspannung am Ausgang des Gleichrichters der erste Schalter (K1) geöffnet wird und gleichzeitig der zweite Schalter (K2) umschaltet, so daß das Schaltnetzteil (SNT) über die Mittel (D₆, D₇, D₉; T₂; R₃, R₄) zur Gleichrichtung und Begrenzung einer Spannung weiterhin mit Spannung versorgt wird.

8. Verfahren nach Anspruch 7, **dadurch gekennzeichnet, daß** der Hochsetzsteller durch die Steuerschaltung zur Bereitstellung einer Leistungsfaktorkorrekturfunktion angesteuert wird.

## Claims

1. Electrical power supply circuit for providing a stabilised output direct voltage U_{G}, consisting of a power rectifier that can be connected on the input side to an alternating power supply by way of a first controllable switch (K1) and a step-up converter connected to the same on the output side, as well as an electronic control circuit that is provided with elements for monitoring the output voltage of the power rectifier and can be supplied with an operating current by way of a switched-mode power supply from the output voltage of the step-up converter, **characterised by** the fact that the switched-mode power supply is additionally connected on the input side to elements (D6, D7, D8; T2; R3, R4) for rectifying and limiting a voltage, which elements can be connected directly to the alternating power supply by way of a second controllable switch (K2).

2. Electrical power supply circuit in accordance with Claim 1, **characterised by** the fact that the control circuit encompasses a micro-processor.

3. Electrical power supply circuit in accordance with Claim 1 or Claim 2, **characterised by** the fact that the first controllable switch (K1) and the second controllable switch (K2) are arranged parallel to each other, with the first switch (K1) executed as a make-break switch and the second switch (K2) as a changeover switch.

4. Electrical power supply circuit in accordance with any of Claims 1 to 3, **characterised by** the fact that the first controllable switch (K1) and the second controllable switch (K2) are both executed as relays.

5. Electrical power supply circuit in accordance with any of Claims 1 to 4, **characterised by** the fact that the elements for rectifying and limiting a voltage connected to the switched-mode power supply (SNT) on the input side comprise a longitudinal diode (D6) as well as a longitudinal transistor (T2) that is connected with its gate to frame potential by way of a Zener diode (D9).

6. Electrical power supply circuit in accordance with any of Claims 1 to 5, **characterised by** the fact that the switched-mode power supply (SNT) provides two different output voltages for operating the controllable switches (K1, K2) and the micro-processor.

7. Process for operating a switched-mode power supply in accordance with any of the foregoing Claims for which, in normal operations, the power rectifier is connected to the alternating power supply by way of the closed first switch (K1), and the switched-mode power supply (SNT) is supplied from the output voltage of the step-up converter, **characterised by** the fact that the first switch (K1) is opened upon detection of a voltage surge at the output of the power rectifier and simultaneously the second switch (K2) is reversed so that the switched-mode power supply (SNT) continues to be supplied with power by way of the elements (D6, D7, D9; T2; R3, R4) for rectifying and limiting a voltage.

8. Process in accordance with Claim 7, **characterised by** the fact that the step-up converter is actuated by the control circuit for the purpose of providing a power factor correction function.

## Revendications

1. Circuit d'alimentation en tension électrique pour la mise à disposition d'une tension de courant continu de sortie U_{G}, stabilisée, lequel circuit comprend un redresseur de courant pouvant être relié, côté entrée, à un réseau de tension de courant alternatif, par l'intermédiaire d'un premier commutateur commandé (K1), et un circuit élévateur relié, côté sortie, à celui-ci, ainsi qu'un circuit de commande électronique, pourvu de moyens pour le contrôle de la tension de sortie du redresseur, lequel peut être alimenté en tension de service, **caractérisé en ce que** le bloc d'alimentation en mode commuté est en plus, côté entrée, à des moyens (D6, D7, D9 ; T2 ; R3, R4) pour le redressement et la limitation d'une tension, lesquels peuvent être raccordés directement au réseau de tension de courant alternatif au moyen d'un deuxième commutateur commandé (K2).

2. Circuit d'alimentation en tension électrique selon la revendication 1, **caractérisé en ce que** le circuit de commande comprend un microprocesseur.

3. Circuit d'alimentation en tension électrique selon l'une des revendications 1 ou 2, **caractérisé en ce que** le premier commutateur commandé (K1) et le deuxième commutateur commandé (K2) sont disposés parallèlement l'un par rapport à l'autre, le premier commutateur (K1) étant réalisé en tant que commutateur de fin de course et le deuxième commutateur (K2) en tant que commutateur inverseur.

4. Circuit d'alimentation en tension électrique selon l'une des revendications 1 ou 3, **caractérisé en ce** le premier (K1) et le deuxième (K2) commutateurs commandés sont réalisés chacun en tant que relais.

5. Circuit d'alimentation en tension électrique selon l'une des revendications 1 ou 4, **caractérisé en ce que** les moyens de redressement et de imitation d'une tension, reliés, côté entrée, au bloc d'alimentation en mode commuté (SNT), comprennent une diode longitudinale (D6) ainsi qu'un transistor à passage longitudinal (T2) qui est relié par son gate au potentiel de masse par l'intermédiaire d'une diode de Zener (D9).

6. Circuit d'alimentation en tension électrique selon l'une des revendications 1 ou 5, **caractérisé en ce que** le bloc d'alimentation en mode commuté (SNT) délivre deux tensions de sortie différentes pour le fonctionnement des commutateurs commandés (K1, K2) et du microprocesseur.

7. Procédé pour la mise en oeuvre d'un circuit d'alimentation en tension électrique selon l'une des revendications précédentes, le redresseur, en service normal, étant relié au réseau de tension de courant alternatif, par le premier commutateur (K1) fermé, et le bloc d'alimentation en mode commuté (SNT) étant alimenté à partir de la tension de sortie du circuit élévateur, **caractérisé en ce que** lors de la détection d'une surtension à la sortie du redresseur, le premier commutateur (K1) est ouvert et le deuxième commutateur (K2) simultanément commuté de sorte que le bloc d'alimentation en mode commuté (SNT) continue à être alimenté en tension par l'intermédiaire des moyens (D6, D7, D9 ; T2 ; R3, R4) de redressement et de limitation d'une tension.

8. Procédé selon la revendication 7, **caractérisé en ce que** le circuit élévateur est excité par le circuit de commande pour la mise à disposition d'une fonction de correction du facteur de puissance.
